Europäisches Patentamt

European Patent Office

Office européen des brevets

(19)

(11) Publication number: **0 295 339**
**A2**

## EUROPEAN PATENT APPLICATION

(21) Application number: **87201781.9**

(22) Date of filing: **17.09.87**

(51) Int. Cl.4 **B01D 33/14 , B01D 33/04**

(30) Priority: **18.06.87 NL 8701433**

(43) Date of publication of application:
**21.12.88 Bulletin 88/51**

(84) Designated Contracting States:
**AT BE CH DE ES FR GB GR IT LI LU NL SE**

(71) Applicant: **Welgro B.V.**
**Parallelweg 18**
**NL-7141 DC Groenlo(NL)**

(72) Inventor: **Wellink, Theodorus Antonius**
**Hobbemastraat 1**
**NL-7141 XD Groenlo(NL)**

(74) Representative: **Konings, Lucien Marie**
**Cornelis Joseph et al**
**OCTROOIBUREAU ARNOLD & SIEDSMA**
**Sweelinckplein 1**
**NL-2517 GK Den Haag(NL)**

(54) **Method and apparatus for separating liquid out of a substance containing liquid and solid material.**

(57) Method and apparatus for separating liquid out of a substance containing liquid and solid material.

In order to separate liquid and solid material out of a substance, the substance is squeezed in a gap, which is formed between a rotating press body and a filter body carried around the press body. Since the substance is squeezed over a longer zone, the liquid is forced through the filter belt in considerable measure.

FIG.1

# METHOD AND APPARATUS FOR SEPARATING LIQUID OUT OF A SUBSTANCE CONTAINING LIQUID AND SOLID MATERIAL

The invention relates to a method as stated in the heading to claim 1.

Such a method is known. The substance is here squeezed between two belts, which are in turn are pressed between a series of successive pairs of rollers. As a result the substance is pressed in each case over a narrow zone, whereby liquid is displaced to a zone that is either not pressed or is at least pressed to a lesser extent.

The invention has for its object to provide an improved method. For this purpose according to the invention the feature of claim 1 is applied. Since the substance is squeezed over a longer zone, the liquid is forced through the filter means in considerable measure.

The invention also provides an apparatus for performing the method. This apparatus is designated in claim 9. These and other features of the invention will be elucidated in the following description with reference to preferred embodiments

In the drawing in schematic form:

Figs. 1 and 5 show perspective views of two preferred embodiments of an apparatus according to the invention,

Fig. 2 shows on a larger scale a section along the line II-II from fig. 1,

Fig. 3 is a perspective view of another apparatus according to the invention and,

Fig. 4 shows on a larger scale a section along the line IV-IV from fig. 3.

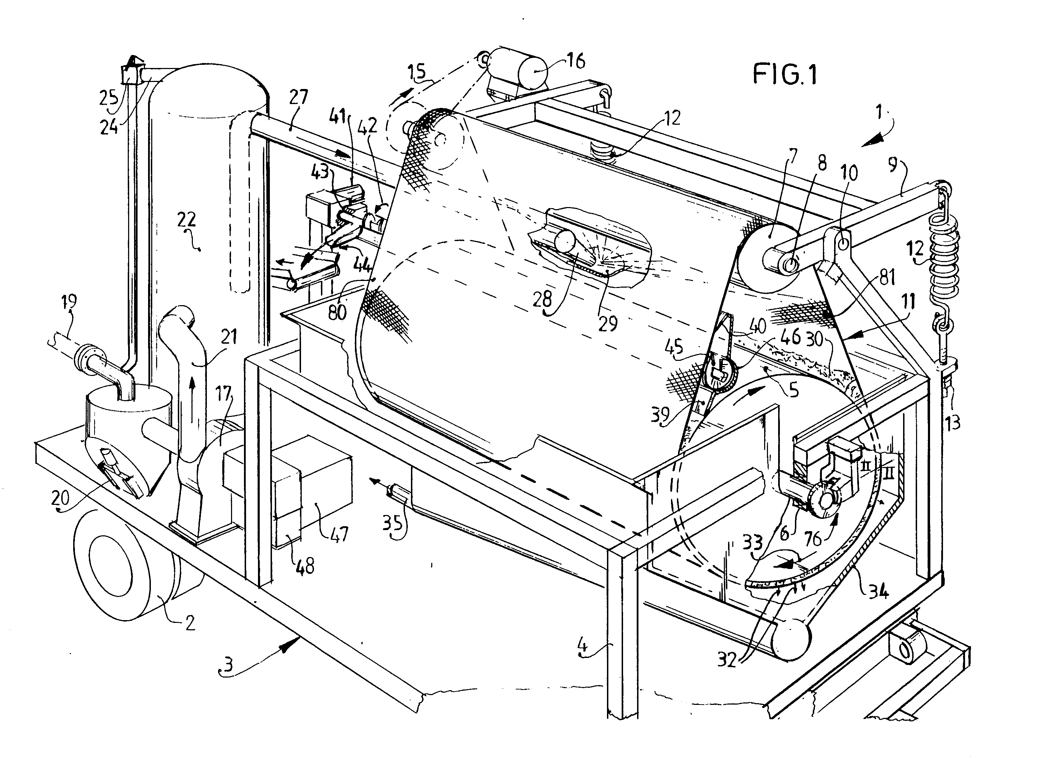

The apparatus 1 from fig. 1 is mobile and comprises for this purpose a carriage 3 provided with wheels 2 on which is mounted a frame 4. Mounted for rotation in the frame 4 by means of two bearings 6 is a press body 5 consisting of a robust, steel, cylindrical drum. A drive rotor 7 is arranged parallel to the press body 5 and is mounted for rotation by means of two bearings 8 in a pivoting frame 9 which in turn is mounted for pivoting on frame 4 by means of two bearings 10. Wrapped around drive roller 7 and press body 5 is an endless filter belt 11. This is stretched tightly by means of two draw springs 12 which grip on the one side onto pivoting frame 9 and on the other onto frame 4 by means of stretching screws 13. Drive rotor 7 is driven via a drive gear 15 by a motor 16 which is attached to pivoting frame 9.

Arranged on carriage 3, is a pump 17 which draws up substance by suction, for example manure out of a cattle farmer's pit, via a settling tank 18 and a hose 19 connected thereto. Hard objects, such as stones, tools etc., found in the liquid manure can settle in the settling tank and can be removed periodically via an outlet provided with a slide hatch 20. In this way damaging of the filter belt 11 by these objects is prevented. Also suitable as substance for drawing up by suction and treating, apart from manure, such as pig and cattle manure, is any other substance from which liquid has to be removed, for example fibrous masses in general and sewage waste in particular. The pressure pipe 21 of pump 17 leads into a pressure tank 22 which is kept under pressure by the supply of substance by the pump 17. At the top of pressure tank 22 a return pipe 24 leads back via a pressure relief valve 25 to settling tank 20. The pressure relief valve 25 is set for a determined pressure. Only when this pressure is exceeded does this valve 25 allow substance to pass through. In this way is achieved that substance at the required pressure, of for example 1 atmosphere overpressure, is fed via a pipe 27 to a jet nozzle 28, the jet from which sprays against a distribution plate 29 which is formed and arranged such that the substance is distributed evenly over the width of filter belt 11 and thus over the axial length of the press body 5. In this way the gap 30 between filter belt 11 and press body 5 is uniformly supplied with substance 31. The substance 31 is carried into the gap 30 in the direction of rotation 33 of press body 5 and filter belt 11 and is continuously squeezed between them with the consequence that the liquid 32 is forced through the fine-mesh filter belt 11 and is then collected in a receiving bin 34 which is arranged beneath and around the press body and which is provided with an outflow 35. Press body 5 is preferably coated with a rubber layer 36 having edges 37 moulded onto them so that the gap 30 is sealed off at the sides. The dry solid material 38 is scraped off the press body 5 from inside the filter belt 11 by means of scrapers 39 and 40 which connect onto a casing 46 in which a screw conveyor 45 is arranged for rotation for transporting the dry material 38 to a material discharge 44. Screw conveyor 45 is mounted in bearings 43 and is driven by a motor 41 in arrow direction 42.

A motor 47 drives pump 17 via a drive gear 48.

As filter belt 11 a per se known belt can be chosen, the mesh width of which is adapted to the type of substance to be treated.

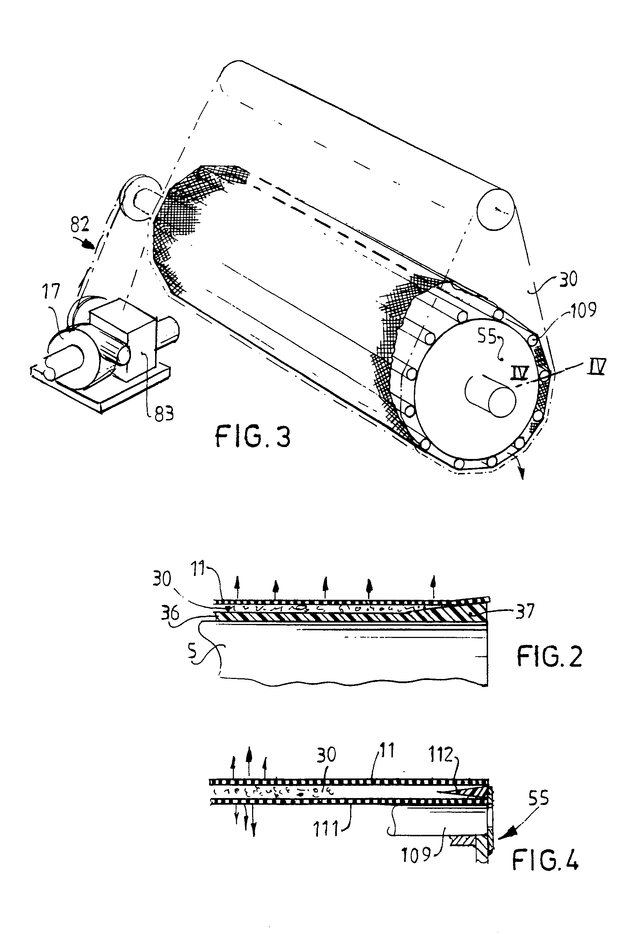

In accordance with fig. 3 and 4 the press body 55 can have an outer surface that is permeable to liquid, for example a metal sieve or longitudinal ribs 109 which are distributed over the periphery of the press member 55 and which have stretched over them a filter belt 111 of the same composition as filter belt 11. The liquid is in this case discharged on two sides out of the substance 31 which is fed into the gap 30 in the manner indicated in fig. 1 between filter belts 11 and 111. A rubber strip 112 is fitted on each side edge of the gap 30 between filter belts 11 and 111. Although not to be recommended, the belt 11 can be replaced in fig. 3 and 4 by an impermeable belt of rubber or the like so that only filter belt 111 allows passage of liquid.

The press body 5, 55 is preferably provided with a brake 76 as a result of which the driving, tractive part 80 of belt 11 is under considerably greater tension than the other part 81 of this belt 11. As a result the squeeze pressure in the gap 30 increases gradually from the point of the substance in-feed, which improves the operation, and thereby the capacity.

Since the apparatus 1 is mobile it can be used, for example by a contractor, for treating the manure of various cattle-farmers and from a large number of pits.

Although favourable results are already achieved when the filter belt 11 is guided along the press body 5 at an angular distance of 45°, a greater angular distance is preferred, and then preferably one of more than 180°. The drive roter 7 is preferably set even closer to the press body 5 than is drawn in fig. 1, in order to make the operational angular distance even greater. The diameter and the length of the cylindrical press body 5 are for example 1 m., but can be considerably greater, for example 2 m. The filter belt preferably has a width, which is of the same order of magnitude as its length carried around the press body 5.

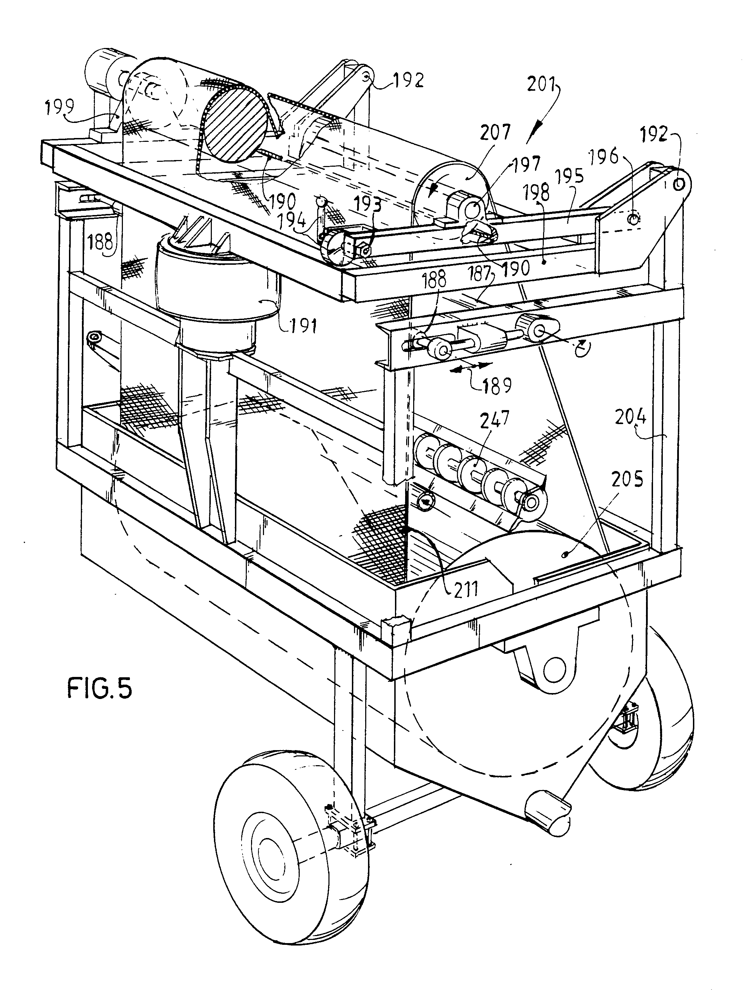

The apparatus 201 of Fig. 5 mainly corresponds to the apparatus 1 but is different with regard to the following measures.

The drive rotor 207 is mounted for rotation in a fixed bearing 199 of a pivoting frame 198 and in a movable bearing 197. To this end the bearing 197 is mounted on an arm 195, being pivotable relating to the pivoting frame 198 around a hinge 196, the free end of the arm 195, being supported on the pivoting frame 198 by means of an adjusting mechanism comprising an eccentric 194 that can be adjusted by means of an arm 194 and that can be fixed by means of a nut 193. The pivoting frame 198 is attached at one side by means of hinges 192 relating to a frame 204, in which the press body 205 is mounted for rotation. At its other side the pivoting frame 198 is supported in respect of the frame 204 through an air bellows 191 having such an air pressure that it can deliver a tensioning force from 2 to 6 Tons, for instance at 1 1⁄3 to 4 Atmosphere, as to the substance to be dehydrated contains less moisture. Thanks to the use of the air spring the drive roller 207 can be displaced over a great difference in level of for instance 15 cm., whilst maintaining nearly the same pressure.

The drive roller 207 has been provided with a scraping knife 190. A solid material being scraped off by the knife falls on the transport screw 247

To loosen the solid material from the filter belt 211. this filter belt is continuously beaten by means of beating means, comprising a roller 188 being driven to and fro according to arrows 189 by a rotatably driven cam shaft 187.

It is remarked. that the apparatuses according to Figs. 1-5 comprise a filter belt being guided only at the inner side. At the outer side the filter belt is not engaged by guide means. As a result the pores of the filter belt are not smeared up at said outer side, so that the moisture can easily escape there.

## Claims

1. Method for separating liquid out of a substance containing liquid and solid material. characterized in that the substance is squeezed in a gap which is formed between a press body and at least one belt carried alongside it at an angular distance, whereby said gap is bounded by filtering means.

2. Method as claimed in claim 1, characterized in that a filter belt is employed as belt.

3. Method as claimed in claim 1 or 2, characterized in that the press body is driven for rotation.

4. Method as claimed in claim 1, 2 or 3, characterized in that the belt is carried alongside the press body at an angular distance of at least 45°.

5. Method as claimed in any of the foregoing claims, characterized in that the belt is carried alongside the press body at an angular distance of at least 90° and preferably one of at least 180° and more preferably of more than 180°.

6. Method as claimed in any of the foregoing claims, characterized in that the belt runs around the press body and a drive rotor, that said belt is driven by said drive rotor and that said press body is decelerated preferably by a unit that is to be driven.

7. Method as claimed in any of the foregoing claims. characterized in that the belt is pulled towards the press body by means of tensioning means.

8. Method as claimed in any of the foregoing claims, characterized in that the substance is sprayed in a jet against a distributor member for distribution of the substance in longitudinal direction of the gap.

9. Apparatus for separating liquid out of a substance containing liquid and solid material. characterized by
   a press body;

at least one belt carried alongside said press body at an angular distance;

substance supply means which feed said substance into the gap between said press body and the belt carried alongside it; and

filtering means bounding said gap.

10. Apparatus as claimed in claim 9, characterized in that the press body is mounted and driven for rotation.

11. Apparatus as claimed in claim 9 or 10, characterized in that the belt is carried alongside the press body at an angular distance of at least 45°.

12. Apparatus as claimed in any of the foregoing claims 1-11, characterized in that the belt is carried alongside the press body at an angular distance of at least 90° and preferably one of at least 180° and more preferably one of more than 180°.

13. Apparatus as claimed in any of the claims 9-12, characterized in that the belt runs around the press body and a drive rotor.

14. Apparatus as claimed in claim 13, characterized in that the press body is mounted for rotation, is driven by the belt and is provided with decelerating means.

15. Apparatus as claimed in any of the foregoing claims 9-14, characterized by tensioning means for pulling the filter belt under - preferably adjustable - tension against the press body, said tensioning means preferably comprising a gas spring, for instance an air spring.

16. Apparatus as claimed in any of the claims 9-15, characterized in that substance feed means comprise at least one jet nozzle and at least one distributing plate co-operating therewith, said jet nozzle being preferably connected to a pressure reservoir preferably provided with control means for setting the pressure required for distributing substance over the gap.

17. Apparatus as claimed in any of the claims 9-16, characterized in that a pump (17) draws substance by suction via a settling tank (18).

18. Apparatus as claimed in any of the claims 9-17, characterized in that it is mobile.

19. Apparatus as claimed in any of the claims 9-18, characterized in that the gap between press body and belt is sealed off at both ends.

20. Apparatus as claimed in any of the claims 9-19, characterized in that the press body is coated with a layer of elastic material, for example rubber.

21. Apparatus as claimed in any of the claims 9-20, characterized in that the press body has a filter surface supported by a grid.

22. Apparatus as claimed in any of the claims 9-21, characterized by beating means for beating off the substance from a filter belt, said substance adhering on the filter belt.

FIG.1

EP 0 295 339 A2

82

17

83

FIG.3

30

109

55

IV    IV

30  11

36

5

37

FIG.2

30  11  112

55

111

109

FIG.4

13256-36

FIG.5